# EUROPEAN PATENT APPLICATION

(11) **EP 3 597 956 A1**
(43) Date of publication of application: **22.01.2020**
(21) Application number: 18184252.7
(22) Date of filing: 18.07.2018
(51) Int. Cl.: F16D 69/02

(54) **FRICTION PAD AND METHOD FOR FABRICATING THE SAME**

(71) Applicant: LinkWin Technology Co., Ltd., 428 Taichung City (TW)
(72) Inventor: Cheng, Yi-Ching, 428 Taichung City (TW); Jiang, Yi-Wen, 428 Taichung City (TW); Wu, Chang-Mou, 428 Taichung City (TW); Lin, Po-Chun, 428 Taichung City (TW)
(74) Representative: Cabinet Chaillot

(57) **Abstract**

A friction pad (10) is provided having a thickness ranging from 0.45 mm to 1 mm sequentially stacked with a carbon fabric layer (11), an adhesive layer (20), a support layer (30), another adhesive layer (20), and another carbon fabric layer (11). The carbon fabric layer (11) is woven by plural fibrous bundles (111), each of which is formed by intertwining plural short fibers (1111) such that the plurality of short fibers partially overlap and twist with each other along an axial direction (X) of the fibrous bundle (111), and each has a lengthwise direction corresponds to the axial direction (X) of the fibrous bundle (111); the adhesive layers (20) are impregnated into the carbon fabric layers (11) to be between the fibrous bundles (111) with an impregnation rate greater than 80%, thereby exposing a peak portion (112) of the fibrous bundles (111) from the adhesive layer (20); the friction pad (10) has a radial tensile strength between 90 MPa and 177 MPa, an axial tensile strength between 60 MPa and 136 MPa, and a dynamic-to-static friction ratio between 0.8 and 0.98.

## Description

### FIELD OF THE INVENTION

The present invention relates to a friction pad, and more particularly, to a friction pad containing short carbon fibers and resin, being highly impregnated and having self-lubricating capabilities, and the fabricating method of the same.

### BACKGROUND OF THE INVENTION

Friction materials are widely used as a necessity in the power machinery industry. The main functionality of friction materials is to utilize the frictional relationship with its corresponding machine parts to generate power transmission or braking effects. Most of the machineries or mechanical apparatuses contain friction materials, so that the quality of the friction materials involved directly influences the performance of them, and even relates to safety of the operators.

Most of the friction materials used in conventional power machineries mainly include asbestos, metal, or paper-based materials. However, imperfections and shortcomings exist while utilizing these materials, for instance:
It has been proven that the earliest developed friction pads made of asbestos materials have considerable impacts on human health and the environment, and have been replaced by other friction materials developed in the later period.

Metal-based friction pads have corrosion issues, and are easily producing harsh noises while in use due to uneven surface or excessive wear of the surface.

Additionally, for paper-based friction pads, although they offer advantages of relatively lower material cost, their friction performance is limited with poor durability, and cannot bear with excessive wear. As a result, paper-based friction materials can only be applied to low-end mechanical fields that require lower mechanical friction capabilities. For the high-end mechanical fields which requires better friction performances, paper-based friction materials are obviously not enough to meet such requirements.

### SUMMARY OF THE INVENTION

In order to improve various shortcomings of conventional asbestos, metal or paper-based material friction pads, a friction pad of the present invention is provided having a thickness ranging from 0.45 mm to 1 mm, and sequentially stacked with a carbon fabric layer, an adhesive layer, a support layer, another adhesive layer, and another carbon fabric layer, characterized in that: the carbon fabric layer is woven by a plurality of fibrous bundles, each of the fibrous bundles is formed by intertwining a plurality of short fibers such that the plurality of short fibers partially overlap and twist with each other along an axial direction of the fibrous bundle, and a lengthwise direction of each of the short fibers corresponds to the axial direction of the fibrous bundle; the adhesive layers are impregnated into the carbon fabric layers to be between the fibrous bundles with an impregnation rate greater than 80%, thereby partially exposing a peak portion of the fibrous bundles of each carbon fabric layer from the adhesive layer; and the radial tensile strength of the friction pad is between 90 MPa and 177 MPa, the axial tensile strength thereof is between 60 MPa and 136 MPa, and the dynamic to static friction ratio thereof is between 0.8 and 0.98.

According to an embodiment of the present invention, the adhesive layers comprise thermoplastic resin or thermosetting resin.

According to an embodiment of the present invention, the thermoplastic resin is polycarbonate and the thermosetting resin is epoxy resin.

According to an embodiment of the present invention, the support layer is carbon fabric, glass fabric, Kevlar fabric, or basalt fabric.

The present invention further provides a method for fabricating a friction pad, characterized by the steps of: coating a gel-like thermosetting resin onto a surface of a release paper forming a membrane-like structure; adhering the thermosetting resin on the release paper to a carbon fabric layer and then removing the release paper; adhering a support layer onto the thermosetting resin and then adhering another release paper having another thermosetting layer coated thereon to the support layer, and releasing the another release paper afterwards; adhering another carbon fabric layer onto the another thermosetting resin and then heat-pressing the thermosetting resins, the carbon fabric layers, and the support layer to form the friction pad; in which the volume of the thermosetting resins is greater than 85% of the volume of the support layer and the carbon fabric layers; and peak portions of a plurality of fibrous bundles of the carbon fabric layer are partially exposed from the thermosetting resin.

According to an embodiment of the present invention, the thermostatic resin is epoxy resin.

As can be seen from the above, the present invention has the following advantages:
1. Compared with conventional asbestos, metal or paper materials, the material of the present invention causes no harm to the environment or the human body, causes no noise issues like metal friction plates will occur during operation, and has better wear resistance and durability, so as to be more suitable to be used in high-grade mechanical fields.
2. The present invention provides great self-lubricating, wear-resisting and durable characteristics by selecting the materials including the carbon fabric layers, the support layer and the adhesive layers, and the fabrication method and impregnation rate, so as to be fully applicable to variable industrial fields such as the automotive industry or the food machinery industry. For instance and to be more specific, the present invention can be applied to torque convertor, gearbox or rear wheel differential in vehicles, or the gear gaskets used in food machineries. Because of the self-lubrication characteristic, the present invention can be directly applied to food machineries without additional lubricating oils, so as to reduce the risk of uptaking such processing additives.

### BRIEF DESCRIPTION OF THE DRAWINGS

FIG. 1 is a schematic diagram illustrating a preferred embodiment of the present invention.
FIG. 2 is a cross-sectional diagram illustrating a preferred embodiment of the present invention.
FIG. 3 is an SEM diagram of a preferred embodiment of the present invention.
FIG. 4a and FIG. 4b is a friction test result of a friction pad using polyester as an adhesive layer according to a preferred embodiment of the present invention.
FIG. 5a and FIG. 5b is a friction test result of a friction pad using epoxy resin as the adhesive layer according to a preferred embodiment of the present invention.
FIG. 6 is an SEM diagram illustrating the impregnation rate of polyester as the adhesive layer according to a preferred embodiment of the present invention.
FIG. 7 is an SEM diagram illustrating the impregnation rate epoxy resin as the adhesive layer according to a preferred embodiment of the present invention.

### DETAILED DESCRIPTION

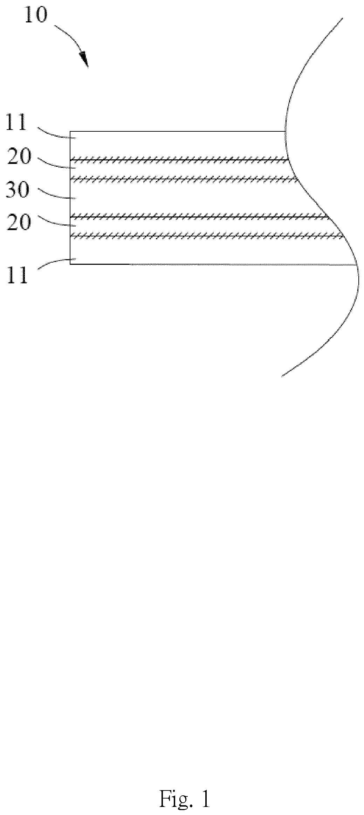

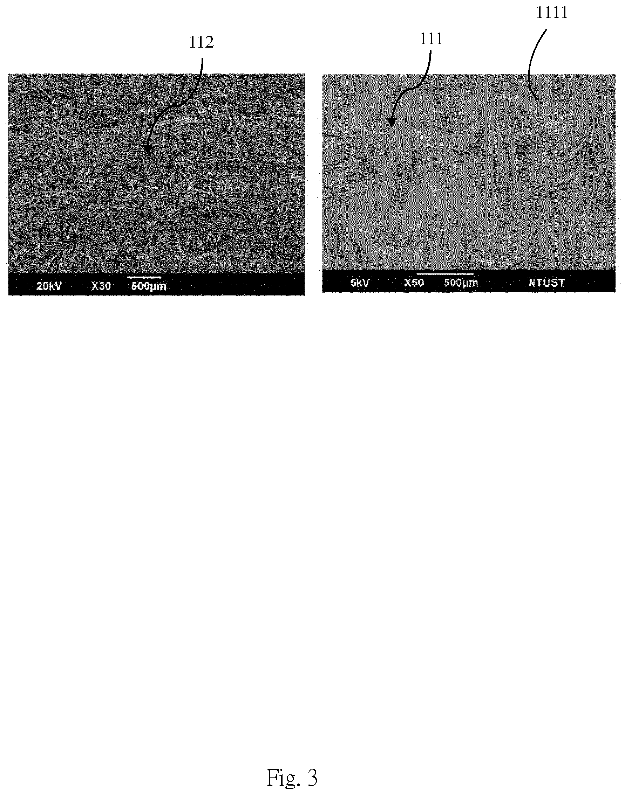

Please refer to FIG. 1 to FIG. 3, a friction pad 10 of the present invention is provided and includes stacked layers in between two carbon fabric layers 11. The friction pad is sequentially stacked with a carbon fabric layer 11, an adhesive layer 20, a support layer 30, another adhesive layer 20, and another carbon fabric layer 11, and has a thickness ranging from 0.45 mm to 1 mm. Each of the carbon fabric layers 11 is woven by a plurality of fibrous bundles 111, each of the fibrous bundles 111 is formed by intertwining a plurality of short fibers 1111 such that the short fibers 1111 partially overlap and twist with each other along an axial direction X of the fibrous bundle 111, and a lengthwise direction of each of the short fibers 1111 corresponds to the axial direction X of the fibrous bundle 111. Preferably, the fiber bundles 111 are interlaced and staggered in the warp and weft directions, as shown in an electron microscope (SEM) view of FIG. 3.

The carbon fabric layer 11 is mainly utilized to provide lubrication and fiction characteristics between mechanical components. However, the thickness of a single carbon fabric layer 11 is thin, by stacking the carbon fabric layer 11 with the support layer 30, the thickness and the strength of the carbon fabric layer 11 can be increased. In addition, the aforementioned support layer 30 can be carbon fabric, glass fabric, Kevlar fabric, basalt fabric, or the combinations of them. While forming a friction pad 10 that includes three or more layers, two carbon fabric layers 11 are stacked as the outermost layer including or sandwiching other support layers 30 (can be one or more stacked layers) in between.

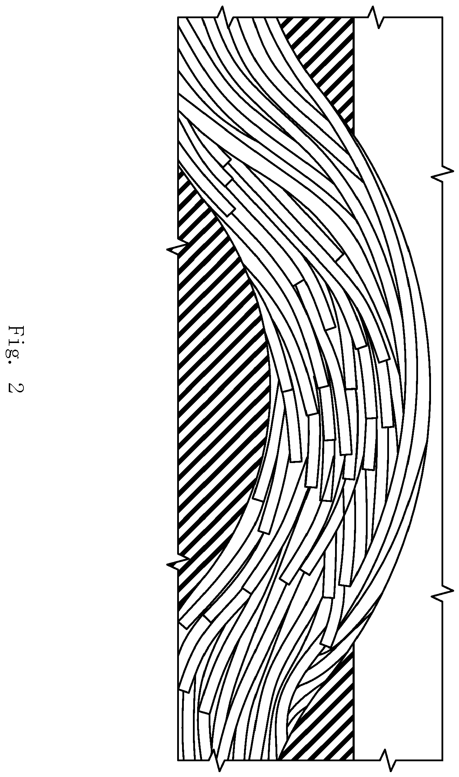

Furthermore, the adhesive layers 20 used in the present invention are not only mainly utilized for providing adhesion between the carbon fabric layer 11 and the support layer 30, but also utilized to provide lubrication or self-lubrication effects to the friction pad 10 of the present invention. Additionally, the adhesive layers 20 are impregnated into the carbon fabric layers 11 to be between the fibrous bundles 111 with an impregnation rate greater than 80% (volume fraction), preferably between 85% and 99%, thereby partially exposing a peak portion 112 of the fibrous bundles 111 of each carbon fabric layer 11 from the adhesive layer 20, as shown in FIG. 2 and FIG. 3, to reach a better wear-resisting characteristic of the friction pad 10.

The adhesive layers 20 can be formed of thermoplastic resin such as polycarbonate (PC), or thermosetting resin such as epoxy resin. While performing the adhesion process between the aforementioned carbon fabric layers 11 and adhesive layer 20, a hot press with conditions of a pressure of 45-250 kg/cm² and a temperature of ≦ 350°C can be applied to bond the carbon fabric layer 11 with the adhesive layer 20 having a specific thickness by heat-press, so that the adhesive layer 20 can be partially impregnated into the carbon fabric layer 11 to be between the fibrous bundles 111, as shown in FIG. 2 and FIG. 3. After the adhesive layer 20 has been heat-hardened (can be heat-hardened or heat-cured), two of the carbon fabric layers 11 can be combined providing a certain degree of structural rigidity, thereby preventing delaminating issues; the aforementioned specific thickness of the adhesive layer 20 varies upon the thickness, volume fraction, and the desired impregnation rate of the adhesive layer 20 into the carbon fabric layer 11. For instance, if the desired impregnation rate of the adhesive layer 20 to the carbon fabric layer 11 is 85%, the adhesive layer 20 with 85 vt% of the thickness of the carbon fabric layer 11 can be applied to be impregnated between the fibrous bundles 111 of the carbon fabric layer 11 by coating, spraying, or film stacking, so that the short fibers, which are discontinuous, of the outermost carbon fabric layer 11 of the present embodiment can be exposed. While in use, such friction pad 10 can provide better self-lubrication, wear-resistance, and durability while compared with conventional arts.

Although the fabricating process utilizing thermosetting resin is relatively more complex, it provides better physical properties (such as hardness, rigidity) and heat-resisting properties, making the present invention to be more applicable to the field of higher-order braking pads or friction pads, thereby improving the overall product value. Taking epoxy resin to be the material of the adhesive layer 20 as an example of the aforementioned thermosetting resin, because of the high-viscosity of epoxy resin under room temperature, it is unlikely to be directly processed, and is not applicable to the same way of forming membranes by using thermoplastic resin. As a result, manners utilizing release papers to be coated with thermosetting resin are more preferable to be applied. Firstly, a gel-like thermosetting resin is coated onto a surface of a release paper forming a membrane-like structure. After adhering it with the carbon fabric layer 11, the release paper can be removed and such structure can be adhesively stacked with the support layer 30. By heat-pressing the stacked layers obtained by repeating these steps, the friction pad 10 of the present invention can be produced. The thermosetting resin can be impregnated into the carbon fabric layer 11 and the support layer 30 by this manner, so as to form the sandwich structure of the friction pad 10 of the present invention.

The following is a verification of the effect of the wear resistance, self-lubricating, heat conduction, and heat dissipation of the friction pad 10 provided by the present invention. Referring to Table 1, which illustrates the specifications of the support layer 30 selected as a test sample for the present invention. Samples A to D of the support layer 30 are glass fabrics purchased from Taiwan Glass Industry Corporation (TGI), and the Kevlar samples are Kevlar fabrics.

**Table 1**

| Samples | Materials | Source and Properties |
|---|---|---|
| A | Support Laver | Glass Fabric from TGI |
| | Thickness (mm) | 0.1 |
| | Basis Weight (g/m²) | 105 |
| | Warp Tensile Strength (N) | 670.10 ± 29.95 |
| | Weft Tensile Strength (N) | 547.82 ± 27.42 |
| B | Support Layer | Glass Fabric from TGI |
| | Thickness (mm) | 0.07 ± 0.01 |
| | Basis Weight (g/m²) | 78 ± 4 |
| | Warp Tensile Strength (N) | 421.05 ± 11.26 |
| | Weft Tensile Strength (N) | 342.01 ± 11.57 |
| C | Support Layer | Glass Fabric from TGI |
| | Thickness (mm) | 0.075 ± 0.01 |
| | Basis Weight (g/m²) | 81 ± 3 |
| | Warp Tensile Strength (N) | 397.33 ± 16.45 |
| | Weft Tensile Strength (N) | 287.37 ± 16.44 |
| D | Support Layer | Glass Fabric from TGI |
| | Thickness (mm) | 0.09 ± 0.01 |
| | Basis Weight (g/m²) | 104 ± 3 |
| | Warp Tensile Strength (N) | 224.91 ± 9.99 |
| | Weft Tensile Strength (N) | 183.49 ± 10.23 |
| Kevlar | Support Layer | Kevlar Fabric |
| | Thickness (mm) | 0.1 |
| | Basis Weight (g/m²) | 63 |
| | Warp Tensile Strength (N) | 2304.62 ± 274.19 |
| | Weft Tensile Strength (N) | 2217 ± 187.23 |

Please refer to Table 2 below, representing the specifications of the carbon fabric layers 11 selected as to correspond with the support layer 30 in Table 1. The carbon fabrics used in the present invention are purchased from Linkwin (Thermedic) Technology Corp.

**Table 2**

| | | |
|---|---|---|
| CF1003-T | Source | Linkwin Technology Corp. |
| | Carbonized Degree (%) | 85.37 |
| | Thickness (mm) | 0.26 ± 0.01 |
| | Basis Weight (g/m²) | 164.6 ± 27.53 |
| | Warp Density (/inch) | 50 ± 2 |
| | Weft density (/inch) | 28±2 |
| | Thermal conductivity (mW/mK) | 42.1 |
| | Thermal Diffusivity (mm²/s) | 0.141 |
| | Thermal Absorptivity (Ws^{1/2} /m²K) | 113.84 |
| | Thermal Resistance (m²mK/W) | 14 |

Referring to Table 3, illustrating a result of a test example using a number of friction pads 10 made of the carbon fabric layers 11 and the support layers 30 introduced in Table 1 and Table 2 with thermoplastic resin - polyester, and thermosetting resin - Epoxy resin, by using Tensilon testing machine with standard test method ASTM D638. As shown in Table 3, the mechanical strengths of the friction pads 10 made of thermoplastic resin are better than those made of thermosetting resin.

**Table 3**

| Sample Specification | | | Tensile Strength (MPa) | |
|---|---|---|---|---|
| Carbon Fabric Laver | Support Layers | Resins | Warp Direction | Weft Direction |
| CF1003-T | A | Polyester | 122.33 ± 7.78 | 93.83 ± 1.52 |
| | B | | 107.89 ± 4.16 | 72.99 ± 7.53 |
| | C | | 98.59 ± 5.414 | 63.01 ± 3.03 |
| | D | | 92.70 ± 1.96 | 68.61 ± 3.49 |
| | Kevlar | | 163.17 ± 2.49 | 83.01 ± 3.75 |
| | A | Epoxy resin | 131.96 ± 4.27 | 134.33 ± 2.47 |
| | B | | 115.15 ± 11.53 | 80.22 ± 3.17 |
| | C | | 110.35 ± 13.77 | 65.29 ± 4.84 |
| | D | | 105.91 ± 11.31 | 67.43 ± 2.72 |
| | Kevlar | | 172.71 ± 4.71 | 92.14 ± 3.12 |

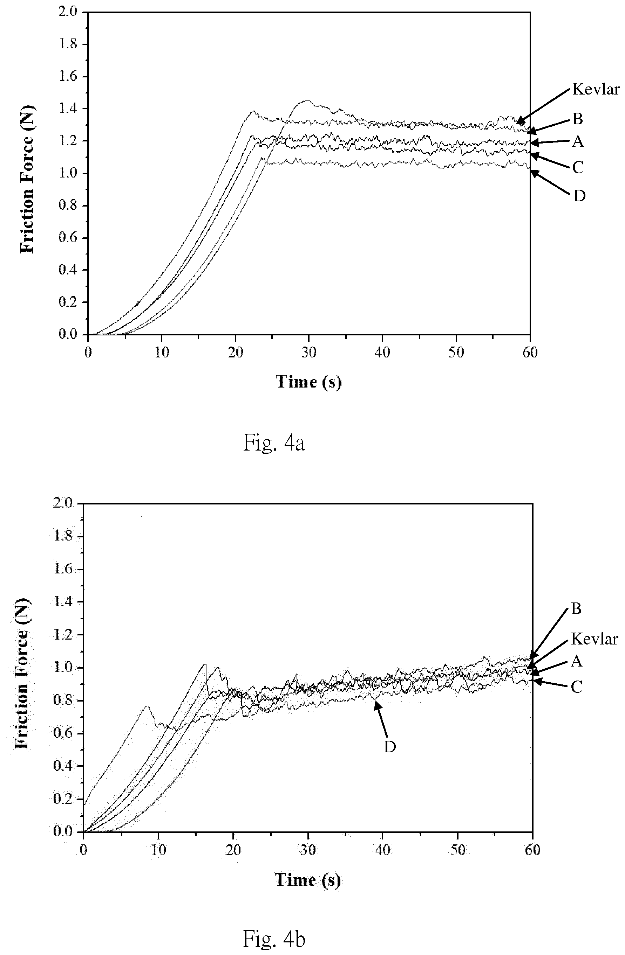

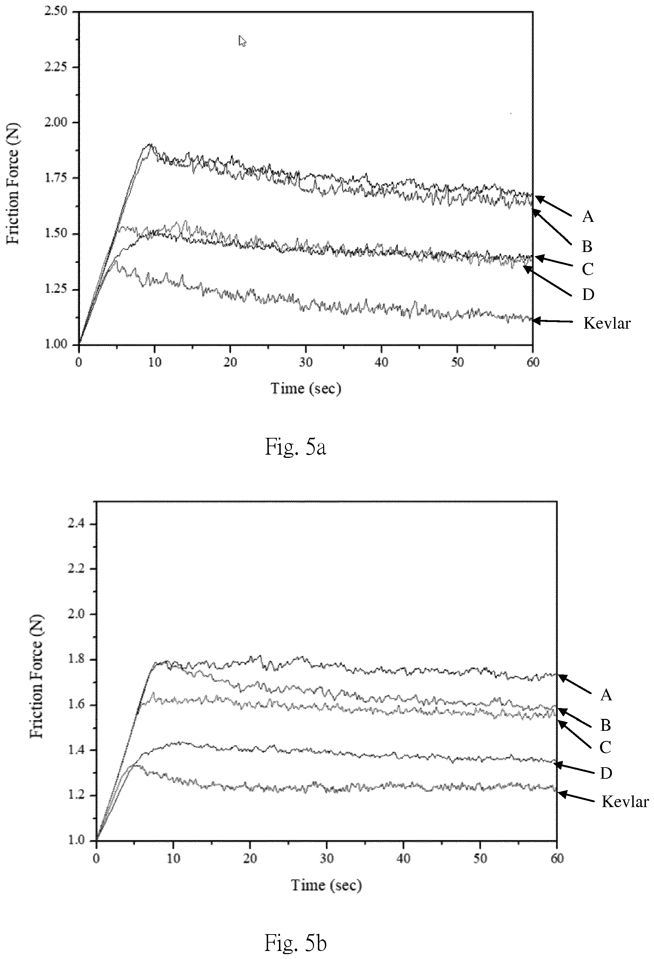

In reference with Table 4, and FIG. 4a to FIG. 5b, illustrating relevant dynamic and static friction test results by using Tensilon testing machine with standard test method ASTM D1894. In which FIG. 4a and FIG. 4b are test results of the friction coefficient for the polyester sample A to D and Kevlar samples corresponding to Table 4. FIG. 4a illustrates the dry friction test result, whereas FIG. 4b illustrates the wet friction test result. FIG. 5a and FIG. 5b show the test results of friction coefficients for the epoxy resin samples A to D and Kevlar samples corresponding to Table 4. FIG. 5a shows the dry friction test result, whereas FIG. 5b shows the wet friction test result. In conclusion, the friction pad 10 of the present invention has a static friction coefficient of preferably 0.8 to 0.98, indicating that the friction pads 10 have high static and dynamic friction coefficient ratio, great torque transmission characteristics, and enhanced wear resistance.

**Table 4**

| Sample Specification | | | Static friction coefficient | | Dynamic friction coefficient | | Dynamic to Static friction coefficient ratio | |
|---|---|---|---|---|---|---|---|---|
| Carbon Fabrics | Support Layers | Resins | Dry | Wet | Dry | Wet | Dry | Wet |
| CF1003-T | A | Polyester | 0.26 | 0.21 | 0.24 | 0.19 | 0.92 | 0.90 |
| | B | | 0.30 | 0.21 | 0.27 | 0.19 | 0.90 | 0.90 |
| | C | | 0.25 | 0.18 | 0.23 | 0.18 | 0.92 | 0.98 |
| | D | | 0.22 | 0.19 | 0.21 | 0.18 | 0.95 | 0.96 |
| | Kevlar | | 0.28 | 0.18 | 0.26 | 0.17 | 0.93 | 0.96 |
| | A | Epoxy resin | 0.38 | 0.37 | 0.35 | 0.36 | 0.92 | 0.97 |
| | B | | 0.37 | 0.36 | 0.35 | 0.32 | 0.95 | 0.89 |
| | C | | 0.30 | 0.29 | 0.28 | 0.28 | 0.93 | 0.97 |
| | D | | 0.31 | 0.33 | 0.27 | 0.32 | 0.87 | 0.97 |
| | Kevlar | | 0.27 | 0.27 | 0.23 | 0.25 | 0.85 | 0.93 |

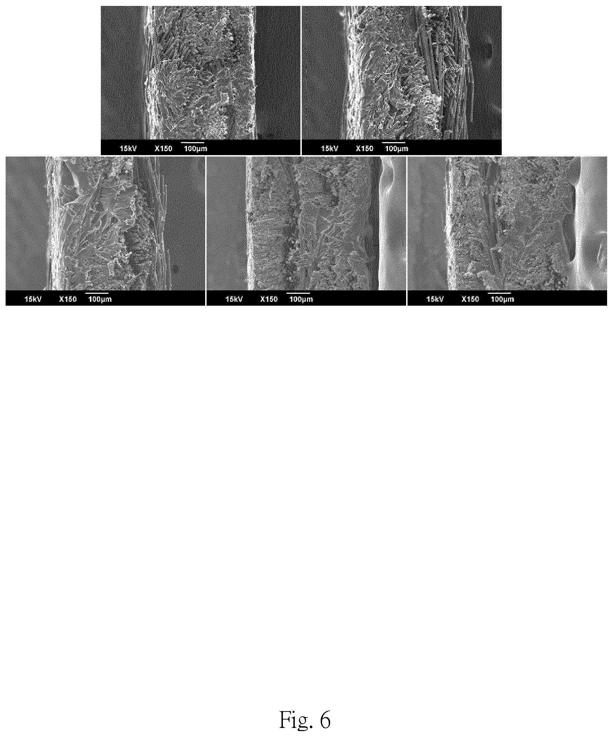

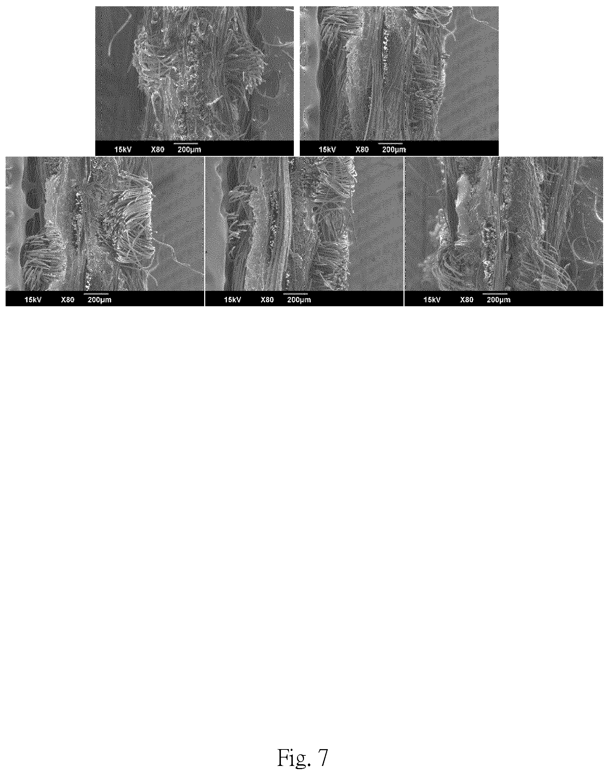

Furthermore, please refer to FIG. 6 to FIG. 7, FIG. 6 to FIG. 7 illustrate the friction pad structures using thermoplastic resin - polyester (FIG. 6) and thermosetting resin - epoxy resin (FIG. 7) as the adhesive layer, respectively. As can be seen from FIG. 6, by utilizing thermoplastic resin as the adhesive layer, the impregnation rate of the adhesive layer may reach 92% to 94%. Similarly, as shown in Figure 7, by utilizing thermoplastic resin as the adhesive layer, the impregnation rate of the adhesive layer may reach more than 85%.

The above description only illustrates preferred embodiments of the present invention and is not intended to limit the scope of the claims claimed in the present invention. Any equivalent alternatives or modifications made within the spirit disclosed in herein shall be included within the scope of the claims claimed in the present invention.

## Claims

1. A friction pad (10) having a thickness ranging from 0.45 mm to 1 mm, and sequentially stacked with a carbon fabric layer (11), an adhesive layer (20), a support layer (30), another adhesive layer (20), and another carbon fabric layer (11), **characterized in that**:
the carbon fabric layer (11) is woven by a plurality of fibrous bundles (111), each of the fibrous bundles (111) is formed by intertwining a plurality of short fibers (1111) such that the plurality of short fibers partially overlap and twist with each other along an axial direction (X) of the fibrous bundle (111), and a lengthwise direction of each of the short fibers (1111) corresponds to the axial direction (X) of the fibrous bundle (111);
the adhesive layers (20) are impregnated into the carbon fabric layers (11) to be between the fibrous bundles (111) with an impregnation rate greater than 80%, thereby partially exposing a peak portion (112) of the fibrous bundles (111) of each carbon fabric layer (11) from the adhesive layer (20); and
the radial tensile strength of the friction pad (10) is between 90 MPa and 177 MPa, the axial tensile strength thereof is between 60 MPa and 136 MPa, and the dynamic to static friction ratio thereof is between 0.8 and 0.98.

2. The friction pad (10) of claim 1, **characterized in that** the adhesive layers (20) comprise thermoplastic resin or thermosetting resin.

3. The friction pad (10) of claim 2, **characterized in that** the thermoplastic resin is polycarbonate and the thermosetting resin is epoxy resin.

4. The friction pad (10) of claim 1, **characterized in that** the support layer (30) is carbon fabric, glass fabric, Kevlar fabric, or basalt fabric.

5. A method for fabricating a friction pad (10), **characterized by** the steps of:
coating a gel-like thermosetting resin (20) onto a surface of a release paper forming a membrane-like structure;
adhering the thermosetting resin (20) on the release paper to a carbon fabric layer (11) and then removing the release paper;
adhering a support layer (30) onto the thermosetting resin (20) and then adhering another release paper having another thermosetting layer (20) coated thereon to the support layer (30), and releasing the another release paper afterwards;
adhering another carbon fabric layer (11) onto the another thermosetting resin (20) and then heat-pressing the thermosetting resins (20), the carbon fabric layers (11), and the support layer (30) to form the friction pad (10); wherein,
the volume of the thermosetting resins (20) is greater than 85% of the volume of the support layer (30) and the carbon fabric layers (11); and
peak portions of a plurality of fibrous bundles (111) of the carbon fabric layer (11) are partially exposed from the thermosetting resin (20).

6. The method of claim 5, **characterized in that** the thermostatic resin (20) is epoxy resin.
